(19) Europäisches Patentamt
European Patent Office
Office européen des brevets

(11) **EP 2 336 516 B1**

(12) **EUROPEAN PATENT SPECIFICATION**

(45) Date of publication and mention
of the grant of the patent:
**09.05.2012 Bulletin 2012/19**

(21) Application number: **11155573.6**

(22) Date of filing: **30.09.2008**

(51) Int Cl.:
**F01N 3/28** (2006.01)

(54) **Mat member**

Mattenelement

Mât

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **27.03.2008 JP 2008084611**

(43) Date of publication of application:
**22.06.2011 Bulletin 2011/25**

(62) Document number(s) of the earlier application(s) in
accordance with Art. 76 EPC:
**08165492.3 / 2 105 593**

(73) Proprietor: **Ibiden Co., Ltd.**
**Ogaki-shi**
**Gifu 503-8604 (JP)**

(72) Inventor: **Saiki, Kenzo**
**Gifu 503-8559 (JP)**

(74) Representative: **HOFFMANN EITLE**
**Arabellastraße 4**
**81925 München (DE)**

(56) References cited:
**EP-A- 0 574 012     US-A- 5 413 766**

**Description**

BACKGROUND OF THE INVENTION

1. Field of the Invention

The present invention relates generally to mat members used in exhaust gas treating apparatuses. More particularly, the present invention relates to a mat member used in an exhaust gas treating apparatus used for treating exhaust gas of a vehicle.

2. Description of the Related Art

Conventionally, many exhaust gas treating apparatuses have been proposed and put to practical use. A typical exhaust gas treating apparatus includes an exhaust pipe communicating with an exhaust gas manifold of the engine. In the middle of the exhaust pipe, there is provided a casing made of, e.g., metal, and an exhaust gas treating body is provided inside the casing. The exhaust gas creating body has plural calls separated from one another by cell walls. These cells often have a honeycomb-like structure. If the exhaust gas treating body has a' honeycomb-like structure, it is also referred to as a honeycomb structural body. Examples of an exhaust gas treating body are a catalyst carrier, an exhaust gas filter such as a diesel particulate filter (DPF), and the like. For example, if the exhaust gas treating body were a DPF, when the exhaust gas passes through the cells of the exhaust gas treating body, particulates would be captured by the cell walls due to the above configuration, and therefore the particulates can be removed from the exhaust gas.

Generally, an exhaust gas treating device is configured to have a mat member made of inorganic fiber provided between the exhaust gas treating body and the casing. This mat member prevents the exhaust gas treating body from breaking as a result of contacting the inside of the casing, which may occur while a vehicle is traveling. The mat member also prevents untreated exhaust gas from leaking through a gap between the casing and the exhaust gas treating body. The mat member also prevents the exhaust gas treating body from being displaced due to exhaust gas pressure. Furthermore, the mat member maintains the exhaust gas treating body at high temperature in order to maintain reactivity.

The mat member is wound around at least a part of the peripheral surface of the exhaust gas treating body, except for its openings, and is integrally fixed to the exhaust gas treating body with the use of taping or the like. Then, this integrated component is press-fitted inside the casing, thereby configuring an exhaust gas treating apparatus.

When the integrated component is press-fitted inside the casing, frictional force is generated between the external surface of the mat member and the internal surface of the casing. If the frictional force is large, the position of the mat member will be displaced with respect to the inside of the exhaust gas treating body and the outside of the casing, while the integrated component is being fitted inside the casing.

To mitigate such a problem, there has been proposed a technique of providing latex on both sides of the mat member, i.e., the surface of the mat member that contacts the internal surface of the casing and the other surface of the mat member that contacts the peripheral surface of the exhaust gas treating body (see patent document 1). With this technique, it is possible to control the frictional force that is generated between the mat member and the casing and the exhaust gas treating body when press-fitting the integrated component in the metal casing. Therefore, this technique facilitates the operation of press-fitting the integrated component.

Patent document 1: Japanese Laid-Open Patent Application No. 2005-74243

The positional displacement of the mat member with respect to the casing and/or the exhaust gas treating body does not only occur while manufacturing an exhaust gas treating apparatus.

For example, if the exhaust gas treating apparatus is arranged in the middle of an exhaust pipe of an engine, when the engine operates, exhaust gas of high temperature (for example, 1000 °C at maximum) will flow through the exhaust gas treating apparatus, and when the engine stops operating, the exhaust gas will stop flowing through the exhaust gas treating apparatus. Due to this change in temperature, the casing and the exhaust gas treating body of the exhaust gas treating apparatus expand and contract, and therefore the mat member repeatedly receives compression/decompression loads in the radial direction of the exhaust gas treating body. Usually, the amount of damaged inorganic fiber included in the mat member increases due to repeatedly receiving such loads. Thus, the holding force of the mat member decreases with the passage of time. When the holding force of the mat member drops below a minimum holding force with respect to the exhaust gas treating body, the position of the mat member becomes displaced with respect to the metal casing and/or the exhaust gas treating body.

With respect to the mat member of patent document 1, the latex provided on both surfaces of the mat member entirely burns away due to the heat of the exhaust gas within a relatively short period of time after starting to use the exhaust gas treating apparatus. Thus, the holding force of the mat member of patent document 1 decreases with the passage of time after starting using the exhaust gas treating apparatus, just like any regular mat member.

Furthermore, when the position of the mat member is displaced, the above-described functions demanded of the mat member may not work.

U.S. patent 5,413,766 discloses a device for reducing exhaust gas contaminants, particularly for motor vehicles, including a housing, a catalyst body disposed therein and an intumescent mat disposed in the gap between the housing wall and the catalyst body. The intumescent mat is a mat of heat-resistant fiber mat with embedded expansion particles whose volume increases when a certain expansion temperature is reached that is produced by the hot exhaust gases. In this mat, an additional heating element is provided in the gap.

SUMMARY OF THE INVENTION

The present invention provides a mat member used in the exhaust gas treating apparatus in which one or more of the above-described disadvantages are eliminated.

A preferred embodiment of the present invention provides a mat member in which the positional displacement of the mat member with respect to an exhaust gas treating body and a casing is mitigated, when the mat member is used in an exhaust gas treating apparatus.

The present invention provides a mat member including a first main surface; a second main surface; inorganic fiber; and a heating element configured to emit heat, the heating element being provided on at least one of the first main surface and the second main surface, in which the heating element emits the heat in response to an exothermic chemical relation, and one of a first metal or a first alloy, and one of a second metal or a second alloy or an inorganic compound are used as starting materials for the chemical reaction.

BRIEF DESCRIPTION OF THE DRAWINGS

Other objects, features and advantages of the present invention will become more apparent from the following detailed description when read in conjunction with the accompanying drawings, in which:

FIG. 1 is a schematic diagram of an exhaust gas treating apparatus in a disassembled state;
FIG. 2 is a schematic cross-sectional view cf a vertical plane with respect to the longitudinal direction of the exhaust gas treating apparatus;
FIG. 3 is a schematic diagram of a mat member used in the exhaust gas treating apparatus;
FIG. 4 is a schematic cross-sectional view of an interface between a mat member and a casing after the heating element has emitted heat, in the exhaust gas treating apparatus;
FIG. 5 shows examples of exothermic chemical reactions using metal and inorganic compounds as starting materials;
FIG. 6 shows examples of exothermic chemical reactions using a first metal and a second metal as starting materials;
FIG. 7 shows examples of exothermic chemical reactions using three kinds of starting materials;
FIG. 8 is an example of a flowchart of a method of manufacturing the exhaust gas treating apparatus;
FIG. 9 illustrates an example of an application of the exhaust gas treating apparatus;
FIG. 10 is a schematic cross-sectional view of another interface between a mat member and a casing after the heating element has emitted heat, in the exhaust gas treating apparatus;
FIG. 11 is a schematic diagram of an example of a mat member according to the present invention;
FIG. 12 is a flowchart of a method of manufacturing the mat member according to the present invention;
FIG. 13 is a schematic cross-sectional view of a test sample;
FIG. 14 is a schematic diagram of a testing apparatus for measuring bonding strength; and
FIG. 15 is a graph illustrating the relationship between heat generation densities of the powder mixture and bonding strengths.

DETAILED DESCRIPTION OF THE PREFERRED EMBODIMENTS

A description is given, with reference to the accompanying drawings, of an embodiment of the present invention.

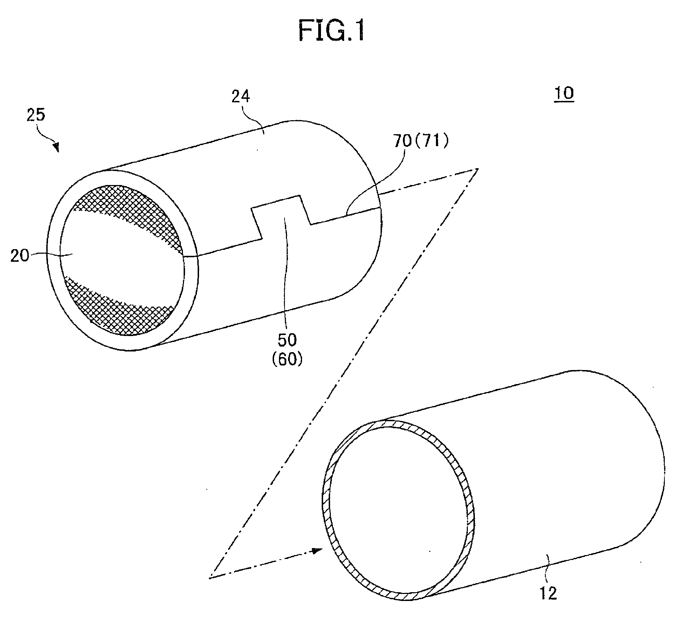

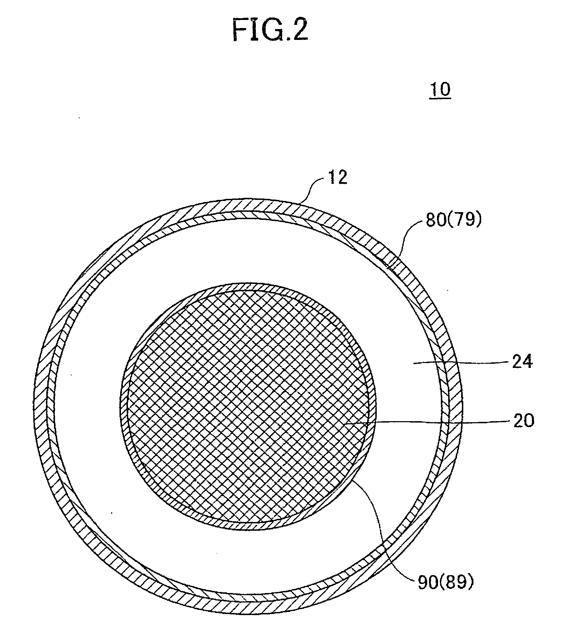

FIG. 1 is a schematic perspective view of an exhaust gas treating apparatus in a disassembled state. Furthermore, FIG. 2 is a schematic cross-sectional view of a vertical plane with respect to the axial (longitudinal) direction of the exhaust gas treating apparatus shown in FIG. 1. The example of the exhaust gas treating apparatus shown in FIG. 1 is manufactured by a press-fitting method. However, it is obvious to those skilled in the art that the exhaust gas treating apparatus may be manufactured by another method, such as a clamshell method, a winding-tightening method, a sizing method, or the like.

As shown in FIG. 1, an exhaust gas treating apparatus 10 includes an exhaust gas treating body 20, a mat member 24 wound around the peripheral surface of the exhaust gas treating body 20, and a casing 12 for accommodating the exhaust gas treating body 20 around which the mat member 24 is wound (hereinafter, "integrated exhaust gas treating body 25").

The exhaust gas treating body 20 is, for example, a catalyst carrier having plural through holes extending in a direction parallel to the longitudinal direction. In this catalyst carrier, a catalyst is supported by each of the cell walls made of ceramics forming a honeycomb structure, for example. Alternatively, the exhaust gas treating body 20 may be a DPF having plural through holes extending in a direction parallel to the longitudinal direction, in which the ends of the through holes are sealed in a checkered manner at both of the opening faces of the exhaust gas treating body 20.

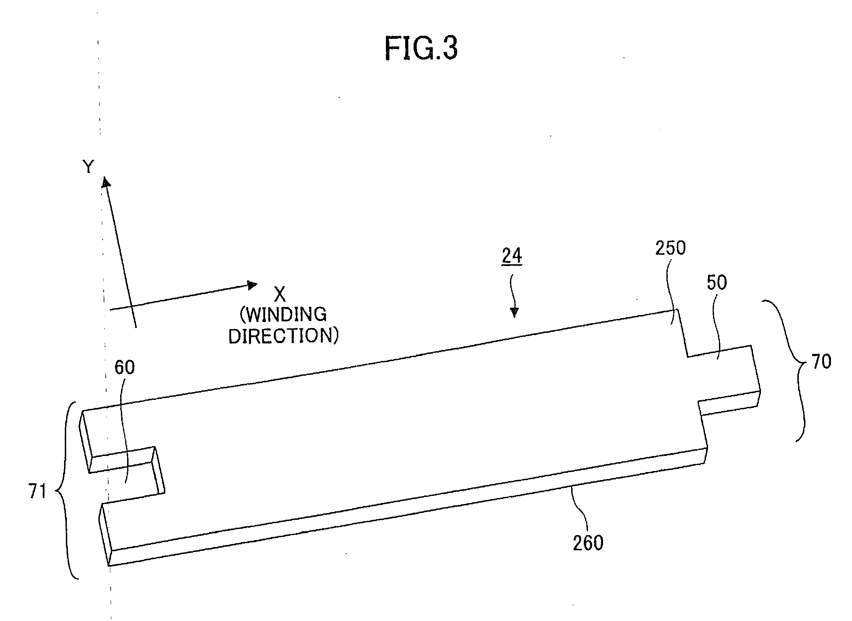

FIG. 3 illustrates an example of the mat member 24. The mat member 24 includes a first main surface 250 and a second main surface 260. Furthermore, the mat member 24 includes two edge faces 70 and 71 perpendicular to the direction in which the sheet member 24 is wound (X direction in FIG. 3). The edge faces 70 and 71 have a mating protruding part 50 and a mating receding part 60, respectively. Thus, when the mat member 24 is wound around the peripheral surface of the exhaust gas treating body 20 as shown in FIG. 1, the mating protruding part 50 is mated to the mating receding part 60, and the mat member 24 is fixed to the exhaust gas treating body 20. Moreover, the edge faces 70 and 71 of the mat member 24 are fixed with the use of adhesive tape or the like so that the mated part does not become detached while handling the "integrated exhaust gas treating body 25".

The mat members 24 constitutes a mat-like component including inorganic fiber. Any kind of inorganic fiber may be used; however, inorganic fiber including alumina and silica is typically used. If the mat member 24 were only made of inorganic fiber, the bulk of the mat member 24 would increase, and it would be difficult to handle the mat member 24. Therefore, the mat member 24 is usually impregnated with an organic binder.

The casing 12 constitutes metal such as stainless steel, nickel alloy, or the like.

As shown in FIG. 2, the exhaust gas treating apparatus 10 includes a first heating element 80 provided at an interface 79 of the mat member 24 and the case 12, and a second heating element 90 provided at an interface 89 of the exhaust gas treating body 20 and the mat member 24, although not shown in FIG. 1 nor described with reference to FIG. 1 as a matter of clarification. In this example, the first heating element 80 and the second hearing element 90 are provided at both interfaces 79 and 89, respectively; however, either one may be omitted. Furthermore, the first heating element 80 may be provided across the entire interface 79 and the second heating element 90 may be provided across the entire interface 89, respectively, or the first heating element 80 may be provided at a part of the interface 79 and the second heating element 90 may be provided at a part of the interface 89, respectively. The first and second heating elements 80 and 90 have features of emitting heat when the temperature exceeds a predetermined value. For example, the first and second heating elements 80 and 90 constitute a substance that generates a significant exothermic reaction in a temperature region where the temperature exceeds a predetermined value.

Next, description are given of effects of the exhaust gas treating apparatus 10.

Generally, for example, when an exhaust gas treating apparatus is provided in the middle of an exhaust pipe of an engine, and the engine operates, exhaust gas of high temperature (typically 400 °C through 1000 °C) flows through the exhaust gas treating apparatus, and when the engine stops, exhaust gas stops flowing through the exhaust gas treating apparatus. Due to the change in temperature, the casing and the exhaust gas treating body of the exhaust gas treating apparatus expand/contract, and therefore the mat member repeatedly receives compression/decompression loads in the radial direction of the exhaust gas treating body from both main surfaces. Usually, the amount of damaged inorganic fiber included in the mat member increases due to repeatedly receiving such loads. Thus, the holding force of the mat member decreases with the passage of time. Subsequently, when the holding force the mat member drops below the minimum value necessary for holding the exhaust gas treating body, the mat member can no longer hold the exhaust gas treating body. Thus, the exhaust gas treating body or the mat member becomes displaced from the predetermined position, and therefore the exhaust gas treating apparatus may not be able to effectively treat the exhaust gas.

However, as described above, the exhaust gas treating apparatus 10 includes the first heating element 80 and the second heating element 90 which are provided at the interface 79 and the interface 89, respectively.

The first heating element 80 and the second heating element 90 are heated by heat of the exhaust gas that enters the exhaust gas treating body 20 while the exhaust gas treating apparatus 10 is being used. When the temperature of the first heating element 80 and the second heating element 90 exceeds a predetermined value, heat is emitted from the first heating element 80 and the second heating element 90. This, the temperature of the positions where the first heating element 80 and the second heating element 90 are disposed and neighboring positions increases acutely due to the heat emitted from the heating elements. For example, when the first heating element 80 is provided at the interface 79 of the mat member 24 and the casing 12, the temperature rises locally and acutely at a position on the casing 12 in contact with or close to the first heating element 80 and neighboring positions (hereinafter, "high temperature contact position"). When the temperature of this "high temperature contact position" exceeds the melting point of the material of the inner surface of the casing 12, the inner surface of the casing 12 melts, and molten material is formed. The molten material generated from the casing 12 moves, in a molten state, toward the outer surface of the mat member 24 (e.g., the first main surface 250) facing the inner surface of the casing 12. Furthermore, the molten material enters inside the mat member 24 from the outer surface of the mat member 24. However, as the molten material moves, the distance between the molten material and the first heating element 80 increases, and as this distance increases, the temperature of the molten material decreases. Accordingly, when the molten material has moved a certain distance, e.g., the molten material reaches a certain position on the first main surface 250 of the mat member 24 and/or a certain depth inside the mat member 24, the temperature of the molten material falls below its melting point. Accordingly, the molten material starts solidifying. For example, when the first heating element 80 stops generating heat as the substance contributing to heat generation disappears, the local increase in temperature of the casing 12 stops, and the formation of molten material will stop.

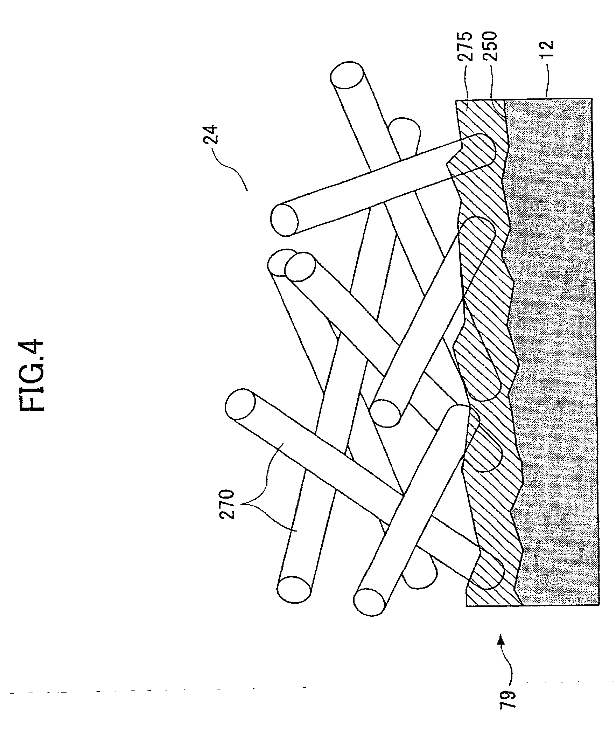

Due to the sequential process of melting the inner surface of the casing 12, moving the molten material, and solidifying molten material, the interface 79 of the mat member 24 and the casing 12 will finally have the form as illustrated in FIG. 4. That is, a molten-solidified layer 275 will be formed at the interface 79, extending from the first main surface 250 of the mat member in the depth direction of the mat member.

The molten-solidified layer 275 contributes to enhancing the bonding strength of the casing 12 and the mat member 24. The layer 275 is solidified with many inorganic fibers 270 of the mat member 24 captured in the molten-solidified layer 275, so that the molten-solidified layer 275 firmly bonds together the mat member 24 and the casing 12. The molten-solidified layer 275 extends inside the mat member 24, and therefore the mat member 24 has favorable resistance with respect to a force in the lateral direction (longitudinal direction) of the exhaust gas treating apparatus. Accordingly, once the molten-solidified layer 275 is formed, the positional displacement of the mat member 24 with respect to the casing 12 hardly occurs. It is particularly noted that this effect is maintained even as features of a typical mat member changes with the passage of time, i.e., even as the amount of damaged inorganic materials included in the mat member increases with the passage of time.

Accordingly, in the exhaust gas treating apparatus, the positional displacement of components hardly occurs for a longer period of time compared to conventional exhaust gas treating apparatuses.

Furthermore, as the casing 12 locally melts as described above, the surface roughness of the inner surface of the casing 12 will be relatively high. The increase in surface roughness contributes to the increase in the friction coefficient with respect to the movement of the mat member 24 along the longitudinal direction of the exhaust gas treating apparatus. Accordingly, assuming that the mat member 24 receives large stress in this direction from outside and part of the molten-solidified layer 275 breaks, the rough surface of the casing 12 will continue to mitigate the positional displacement of the mat member, thereby attaining a significant effect.

It is obvious that the same effect can be attained by the second heating element 90 at the interface 89 between the mat member 24 and the exhaust gas treating body 20. However, the inner surface of the casing 12 usually constitutes metal, whereas the peripheral surface of the exhaust gas treating body 20 constitutes ceramics such as cordierite or the like, which has a higher melting point than that of metal. Thus, in order to form the molten-solidified layer 275 as described above at the interface 89, the heat value of the second heating element 90 is preferably higher than that of the first heating element 80.

Such a heating element may emit heat according to an exothermic chemical reaction.

A preferable chemical reaction to be selected for this configuration is a chemical reaction that occurs at a temperature range of the exhaust gas (e.g., 450 °C through 1000 °C). Accordingly, when the exhaust gas flows through, the exothermic reaction starts immediately, thus attaining the above-described effect.

The starting material used for the chemical reaction is preferably configured to form a liquid at the above-described temperature range of exhaust gas, i.e., the starting material preferably has a melting point within this range. By using such a starting material, the chemical reaction can be quickly generated. In a typical chemical reaction, the reaction of liquid/solid or liquid/liquid is faster than that of solid/solid.

The melting point of the product generated as a result of the chemical reaction is preferably higher than the above-described temperature range of exhaust gas. If the product is in a liquid-phase state, the molten material of the casing or the exhaust gas treating body is mixed with this product, which may hamper the movement of the molten material toward the mat member. However, the product generated as a result of the chemical reaction may be a product that sublimates or volatilizes in the above-described temperature range of exhaust gas. In this case, it is possible to mitigate the reaction product from hampering the movement of the molten material toward the mat member.

The heat generation density of the heating element (heat value per unit area at the interface 79 or the interface 89) may be in a range of 0.1 $kJ/cm^2$ through 0.4 $kJ/cm^2$, although this depends on the melting target. These values depend on the melting point, the melting amount, the melting area and the like of the melting target.

In the case of a heating element using a chemical reaction, the starting material necessary for the reaction may be any of the various material systems described below.

(A) Combination of metal (or alloy) and inorganic compound

Combinations of metal and an inorganic compound include, for example, a combination of aluminum and oxide, nitride, carbide, or the like. The oxide may be, for example, iron oxide, titanium oxide, or the like. The nitride may be titanium oxide, silicon nitride, titanium nitride, zirconium nitride, hafnium nitride, vanadium nitride, niobium nitride, tantalum nitride, or the like. The carbide may be boron carbide, aluminum carbide, or the like.

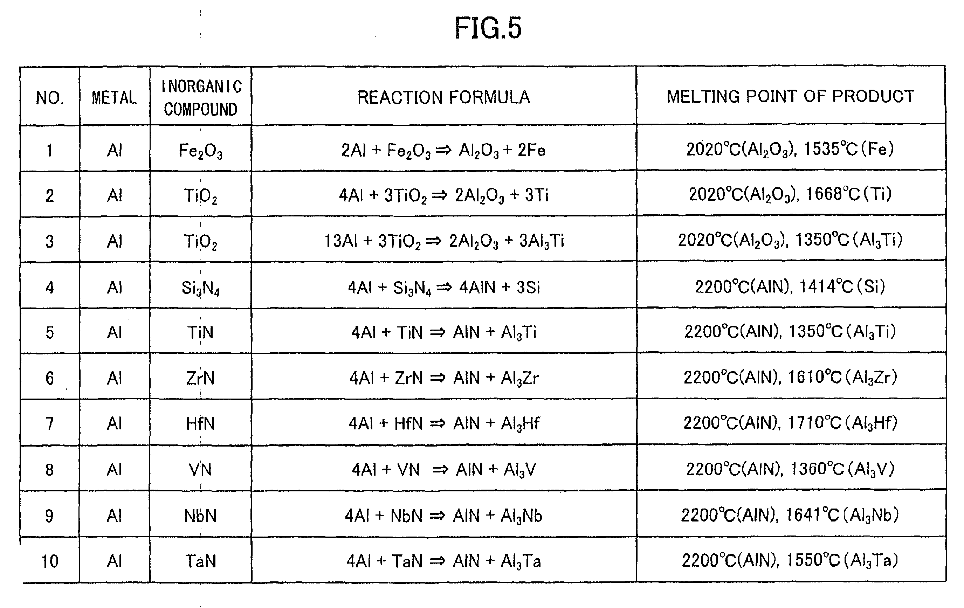

FIG. 5 shows examples of combinations of metals and inorganic compounds, together with melting points of the products. In each reaction formula, the reaction heat is a negative value (e.g., the reaction heat ΔH of the reaction of No. 1 is -851.5 kJ/mol), which means that these reactions are exothermic reactions. Accordingly, each combination may be used as the starting material of the above-described heating element. In FIG. 5, the melting point of aluminum used as one of the starting materials for each reaction is approximately 660 °C, which is equal to or lower than the temperature of exhaust gas described above. Furthermore, the melting point of the product of each reaction is at least 1350 °C (e.g., the cases of Nos. 3 and 5), which is higher than the temperature of exhaust gas.

(B) Combination of metal (or alloy) and metal (or alloy)

A mixture of a first metal (or alloy) and a second metal (or alloy) may be used as the starting material necessary for a chemical reaction. As the first metal, aluminum may be used. The second metal may include steel, titanium, zirconium, hafnium, vanadium, niobium, tantalum, nickel, and the like.

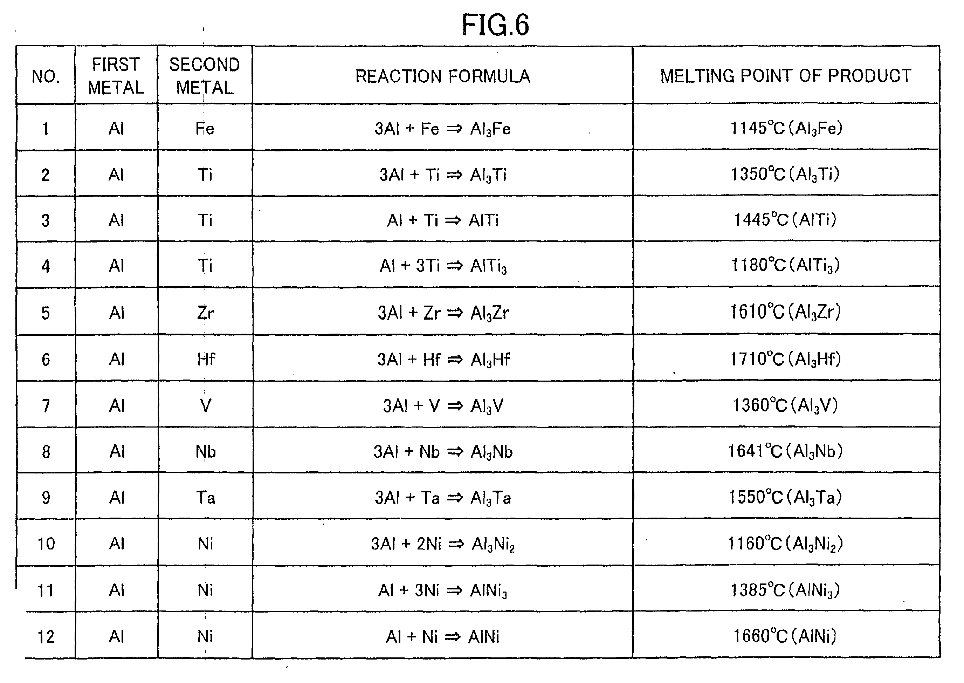

FIG. 6 shows examples of combinations of a first metal (or alloy) and a second metal (or alloy), together with melting points of the products. In each reaction formula, the reaction heat is a negative value, which means that these reactions are exothermic reactions. Accordingly, each combination may be used as the starting material of the above-described heating element. In FIG. 6, the melting point of aluminum used as one of the starting materials for each reaction is approximately 660°C, which is equal to or lower than the temperature of exhaust gas described above. Furthermore, the melting point of the product of each reaction is at least 1145°C (e.g., the cases of No. 1), which is higher than the temperature of exhaust gas.

(C) Combination of three kinds of materials

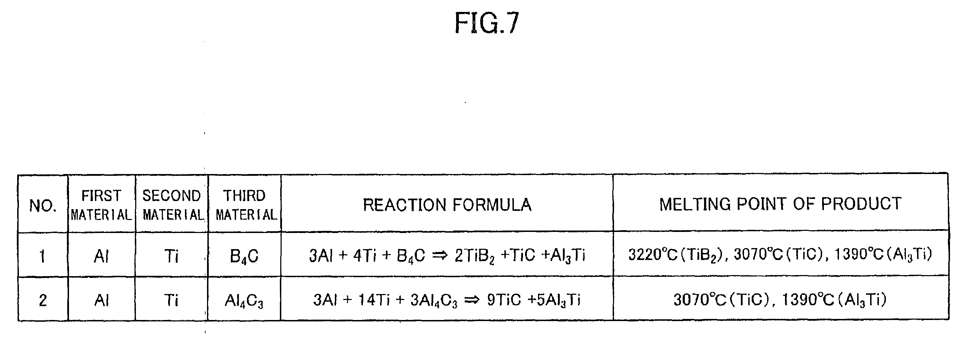

In each of the above combination examples, two kinds of materials are used as the starting materials; however, the combinations of the heating element according to the present invention are not limited thereto. For example, three kinds of materials may be used as the starting materials. FIG. 7 shows examples of such combinations, together with melting points of the products. In each reaction formula, the reaction heat is a negative value, which means that these reactions are exothermic reactions. Accordingly, each combination may be used as the starting material of the above-described heating element. In FIG. 7, the melting point of aluminum used as one of the starting materials for each reaction is approximately 660°C, which is equal to or lower than the temperature of exhaust gas described above. Furthermore, the melting point of the product of each reaction is at least 1390°C ($Al_3Ti$), which is higher than the temperature of exhaust gas.

When aluminum (or aluminum alloy) is used, it is preferable to add a substance having a function of mitigating oxidation of aluminum and/or a function deoxidizing an oxide film on the surface of aluminum. Accordingly, the exothermic reaction can be attained more quickly (or at a lower temperature). Examples of a substance having such functions are Mg, Ca, Li, and the like.

In the above description, metallic elements are taken as examples of metals used as the starting material; however, the metal used as the starting material may be an alloy. For example, Al-Cu alloy, Al-Mn alloy, Al-Si alloy, and Al-Mg alloy have melting points of approximately 550°C, 660°C, 580°C, and 450°C, respectively. Thus, by using these alloys, it is possible to decrease the temperature at which liquid phases generate.

The above combinations are merely examples, and it is obvious that the scope of the present invention is not limited by these examples.

The first heating element 80 and the second heating element 90 may be provided at the interfaces 79 and 89, respectively, by any method such as brush painting, spray painting, or the like. Furthermore, the heating element may be provided at the interfaces 79 and 89 in any form, such as powder, a sheet, a layer, or the like. Particularly, when a heating element that uses exothermic heat generated by a chemical reaction is to be provided, starting materials necessary for a chemical reaction are turned into powder, and the powder may be provided across the entire interface or at a part of the interfaces. Alternatively, the powder may be mixed with an organic solvent to prepare a liquid or a paste, and this mixture may be applied to the interfaces 79 and 89.

The first heating element 80 and the second heating element 90 may be provided on any surface that forms an interface when the exhaust gas treating apparatus is completed, such as the inner surface of the casing 12, the first main surface 250 and/or the second main surface 260 of the mat member 24, the peripheral surface of the exhaust gas treating body 20, or the like.

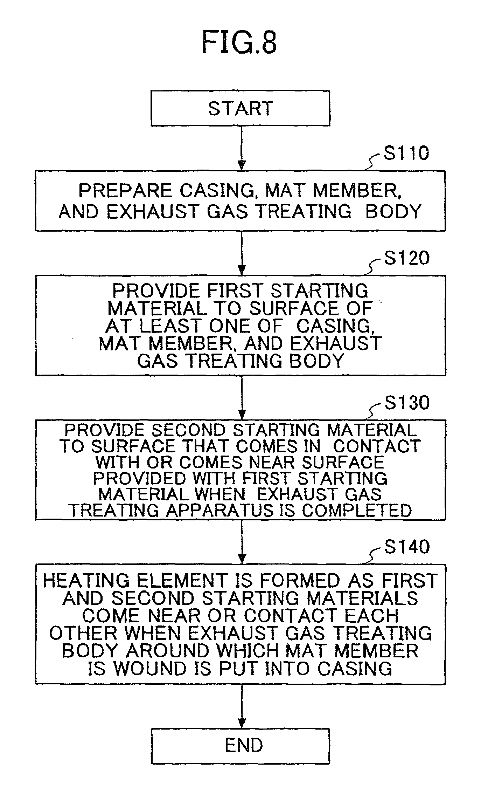

For example, a first starting material necessary for a chemical reaction is provided on the inner surface of the casing 12, and a second starting material is provided on one of the main surfaces of the mat member 24, or the other way around. Accordingly, at the stage of manufacturing the exhaust gas treating apparatus, when the first .starting material and the second starting material contact each other or come close to each other, the first heating element 80 is formed at the interface 79. The same applies to the peripheral surface of the exhaust gas treating body 20 and the other main surface of the mat member 24. FIG. 8 is an example of a flowchart of a method of manufacturing the exhaust gas treating apparatus in which a heating element is provided on the interface 79 and/or the interface 89 by the above method. It is to be noted that in FIG. 8, the "first (second) starting material" may be a single material or may include plural materials.

The features are described above, taking as an example the configuration in which the exhaust gas treating apparatus is actually connected to an exhaust pipe of a vehicle or the like, the heating elements are activated by the heat of exhaust gas that flows through this exhaust pipe, and the heating elements emit heat at the interfaces 79 and 89 (so called "in-situ heat treating method"). However, the above-described molten-solidified layer 275 may be formed at the interface 79 and/or the interface 89 by placing the exhaust gas treating apparatus having the above-described configuration in an electric furnace or the like before actually using the exhaust gas treating apparatus, and keeping the exhaust gas treating apparatus in a high temperature to activate the heating element (so called "thermal pretreatment method").

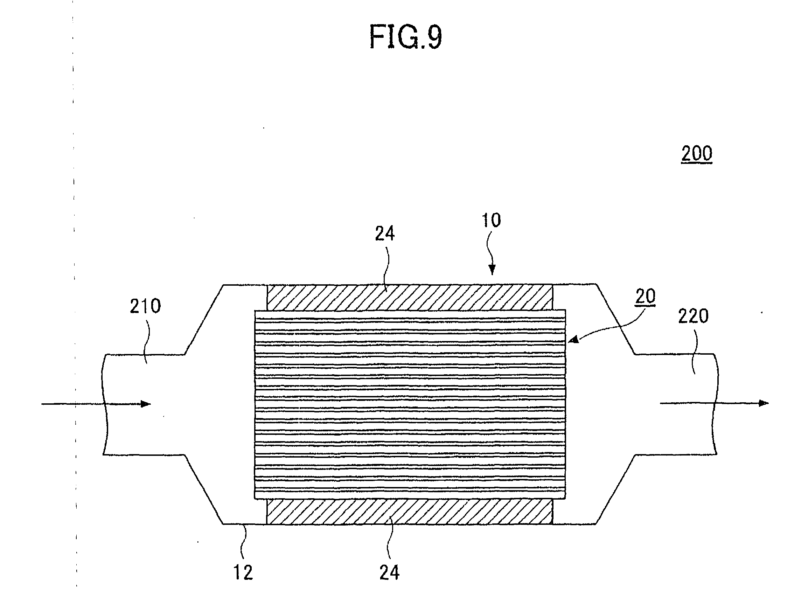

FIG. 9 illustrates an example of an application of the exhaust gas treating apparatus. In the example illustrated in FIG. 9, the exhaust gas treating apparatus 10 is provided in the middle of an exhaust pipe 200 for discharging exhaust gas generated by an engine of a vehicle or the like outside the system.

The exhaust pipe 200 includes an inlet pipe 210 and an outlet pipe 220 for the exhaust gas. The exhaust gas treating apparatus 10 is provided between the inlet pipe 210 and the outlet pipe 220. In the example illustrated in FIG. 9, the inlet pipe 210 and the outlet pipe 220 are taper-shaped in such a manner that their diameters are increased at positions at which they are connected to the casing 12 of the exhaust gas treating apparatus 10. However, they do not necessarily need to be taper-shaped.

As described above, the exhaust gas treating apparatus has a configuration in which positional displacement hardly occurs among the components of the exhaust gas treating body, the mat member, and the casing. Therefore, exhaust gas treatment properties can be stably attained for a long period of time.

The effects of the above features are described as follow. Specifically, in the above-described example, heat is generated from the first heating element 80 and/or the second heating element 90 provided at the interface 79 of the casing 12/mat member 24 and/or the interface 89 of the mat member 24/exhsust gas treating body 20, respectively. Part of the components (the casing or the exhaust cas treating body) melts due to this heat, thereby forming a molten-solidified layer. However, this phenomenon is described only as one example. That is, the first heating element 80 and the second heating element 90 provided at the interfaces 79 and 89, respectively, may exhibit behaviors different from the above phenomenon.

For example, it is assumed that the heating element of No. 1 shown in FIG. 5, which uses aluminum and iron oxide as starting materials, is provided at the interface 79 of the casing 12/mat member 24. For example, when exhaust gas flows through the exhaust gas treating apparatus and the temperature of the interface 79 reaches the melting point of aluminum, the aluminum included in the heating element starts to melt. The molten aluminum may move from the surface of the mat member 24 toward the inside of the mat member 24. Accordingly, part of the molten aluminum may cover part of the inorganic fiber included in the mat member 24. The alumina, which is a reaction product of the heating element, is generated as a result of the reaction of the aluminum in a molten state. That is, alumina is generated wherever the aluminum is present, also inside the mat member 24. Therefore, when the molten aluminum, which is covering a part of the inorganic fiber included in the mat member, changes to a layer of a reaction product (i.e., an alumina layer) as a result of this reaction, the inorganic fiber is captured in the alumina layer.

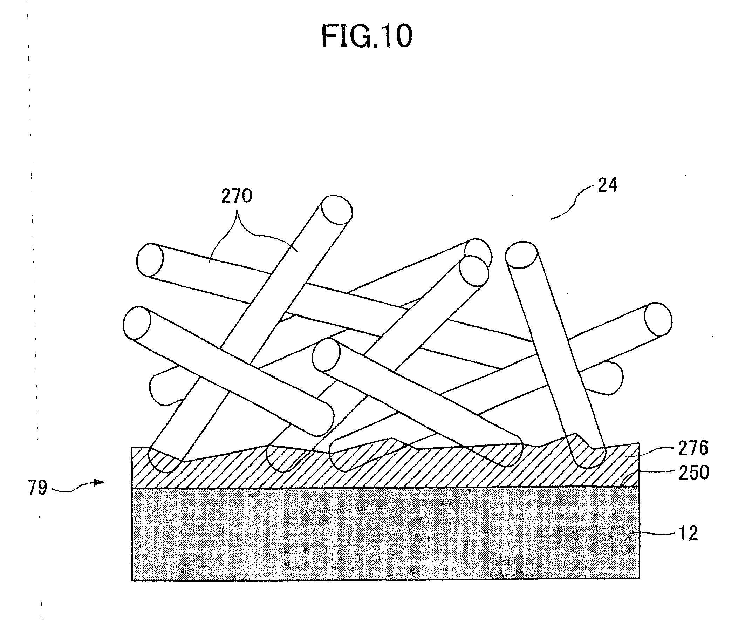

FIG. 10 illustrates the final interface 79 attained as a result of such a phenomenon. At the interface 79, part of the inorganic fibers 270 is captured by a reaction product layer 276. The mat member 24 and the casing are firmly bonded to each other by the reaction product layer 276 which is the final product, and therefore the same effects as above can be achieved. It is to be noted that in this example, unlike the example illustrated in FIG. 4, the casing 12 has not undergone the melting process.

As described above, at the interfaces 79, 89 provided with the first heating element 80 and the second heating element 90, respectively, several phenomena may occur. Particularly, in the actual exhaust gas treating apparatus, it is typical that both of the above phenomena, or even another phenomenon occur at the same time. Thus, it is to be noted that the present invention may be any kind of exhaust gas treating apparatus in which the first heating element 80 and the second heating element 90 are provided at the interfaces 79 and 89, respectively, regardless of the kind of phenomenon that may occur at the interfaces 79 and 89.

(Second embodiment)

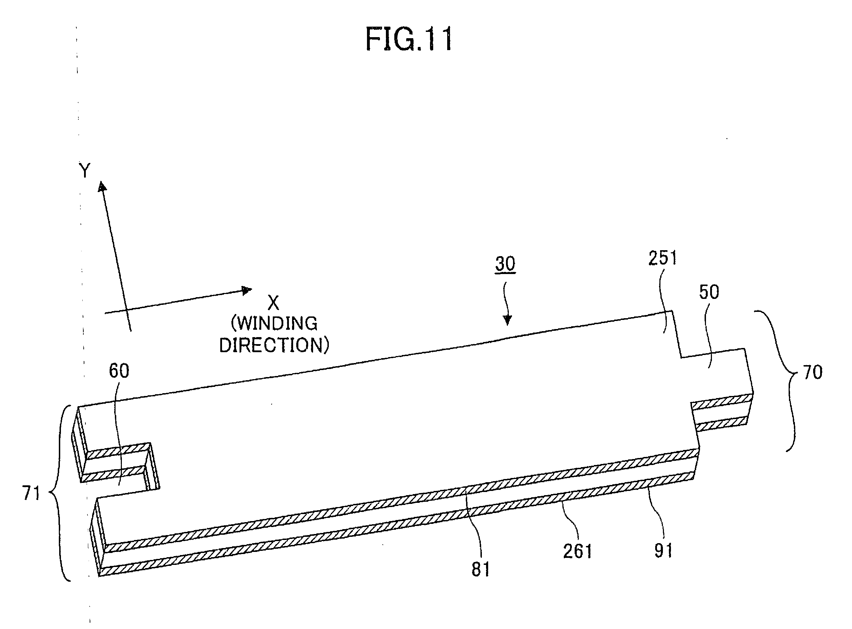

Next, with reference to FIG. 11, a description is given of the present: invention. According to the present invention, a mat member is provided, with which the same effects as described above can be achieved. A mat member 30 according to the present invention basically has the same configuration as the mat member 24 described above. As shown in FIG. 11, the mat member 30 has a heating element 81 and a heating element 91 provided or a first main surface 251 and a second main surface 261, respectively. The heating elements 81 and 91 have the above-described functions; for example, when the temperature exceeds a predetermined value, the heating elements are activated and they generate heat. The heating elements 81 and 91 may be partially or entirely (as illustrated in FIG. 11) provided on the first main surface 251 and the second main surface 261, respectively. Furthermore, in the example shown in FIG. 11, the heating elements 81 and 91 are provided as layers on both main surfaces 251 and 261, respectively. However, the heating elements may be provided in forms other than layers; for example, powder may be sprinkled on the main surfaces 251 and 261. Furthermore, a heating element may be provided on only one of the main surface 251 and 261.

This mat member 30 may further have a sheet member including an organic compound provided on the main surface on which the heating element is provided, to improve the convenience in handling the mat member 30. This is extremely effective when the heating element is in a form other than a layer.

The mat member 30 with such a heating element is wound around the exhaust gas treating body, and is inserted inside a casing to form an "integrated exhaust gas treating body", thereby configuring the exhaust gas treating apparatus. In such an exhaust gas treating apparatus, as described above, for example, the heating element is activated by heat of the exhaust gas, and the heating element emits heat toward the peripheral surface of the exhaust gas treating body and/or the inner surface of the casing. Accordingly, in this case also, the bonding strength at the interface between the exhaust gas treating body and the mat member and/or the bonding strength at the interface between the mat member and the casing will increase due to the function of the molten-solidified layer 275 or the reaction product layer 276, thereby attaining the same effects as described above.

This mat member is advantageous in that heating elements can be easily provided at the interface between the exhaust gas treating body and the mat member and at the interface between the mat member and the casing.

(Manufacturing method of the mat member 30 according to the present invention)

Next, a description is given of an example of a method of manufacturing the mat member 30 according to the present invention.

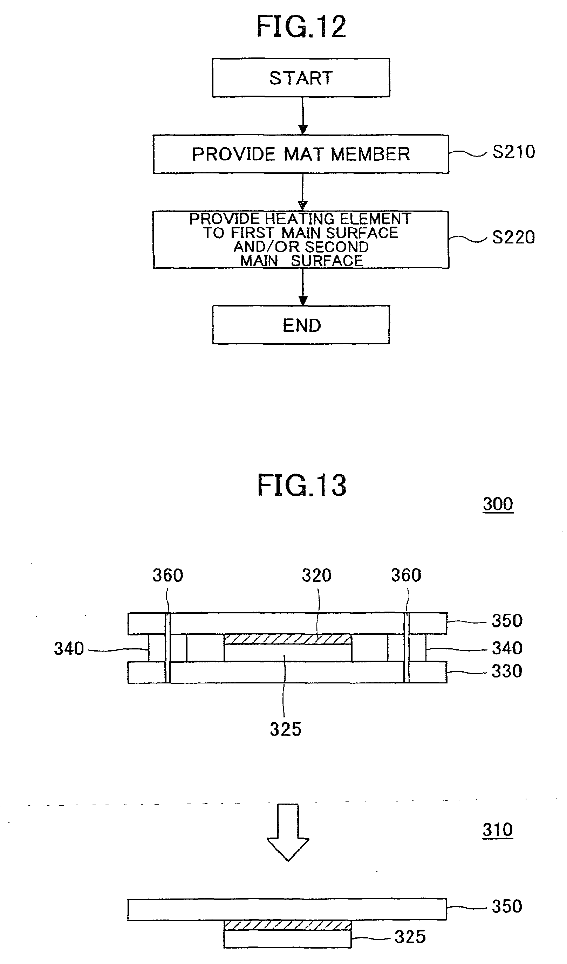

FIG. 12 is a flowchart of a method of manufacturing the mat member according to the present invention. The method of manufacturing the mat member according to the present invention includes a step of providing the mat member including inorganic fiber (step S210) and a step of providing the heating element 81 and/or the heating element 91 on at least part of the first main surface 251 and/or the second main surface 261 of the mat member, respectively (step S220). Detailed descriptions of both steps are given below.

(Step S210)

First, a laminated sheet including inorganic fiber is manufactured. In the following description, a mixture of alumina and silica is used as the inorganic fiber; however, the material of the inorganic fiber is not limited thereto. For example, the inorganic fiber may be made of only alumina or only silica. Silica sol is added to a basic aluminum chloride aqueous solution in which the aluminum content is 70 g/l and the atom ratio is Al/Cl=1.8, so that the composition ratio of alumina:silica becomes for example, 60 through 80:40 through 20, thereby preparing the precursor of inorganic fiber. Particularly, the composition ratio of alumina:silica is more preferably 70 through 74:30 through 26. If the relative proportion of alumina is less than 60%, the composition ratio of the mullite, which is generated from alumina and silica, will decrease. Accordingly, the completed base sheet will tend to have high heat conductivity.

Next, an organic polymer such as polyvinyl alcohol is added to this precursor of alumina fiber. Subsequently, this liquid is concentrated to prepare a spinning solution. This spinning solution is used in a spinning operation performed by a blowing method.

The blowing method is a spinning method performed with the use of airflows blown out from air nozzles and spinning solution flows pressed out from spinning solution supplying nozzles. The gas flow speed from slits of each air nozzle is usually 40 m/s through 200 m/s. The diameter of each spinning solution supplying nozzle is usually 0.1 mm through 0.5 mm, and the liquid amount per spinning solution supplying nozzle is usually around 1 ml/h through 120 ml/h, more preferably around 3 ml/h through 50 ml/h. Under such conditions, the spinning solution pressed out from the spinning solution supplying nozzles will be sufficiently extended without turning into a spray form (mist form), and the fibers will not be deposited onto each other. Accordingly, by optimizing the spinning conditions, it is possible to form a uniform precursor with a narrow fiber diameter distribution.

The average fiber length of the alumina fibers manufactured herein is preferably more than or equal to 250 $\mu$m, and more preferably more than or equal to 500 $\mu$m. If the average fiber length were less than 250 $\mu$m, the fibers would not be sufficiently intertwined, and the strength would be insufficient. The average diameter of the inorganic fibers is not particularly limited; the inorganic fibers preferably have an average diameter in a range of approximately 3 $\mu$m through approximately 8 $\mu$m, more preferably in a range of approximately 5 $\mu$m through approximately 7 $\mu$m.

The precursors that have undergone the spinning process are laminated to each other so that a laminated sheet is manufactured. Then, needling processing is performed on the laminated sheet. Needling processing is performed by inserting and pulling out needles to and from the laminated sheet to thin down the laminated sheet. A needling device is usually used for the needling processing.

Generally, a needling device includes a needle board capable of reciprocating (usually up and down) in the direction in which needles are inserted in and pulled out from the laminated sheet, and a pair of supporting plates disposed on the side of the top main surface and on the side of the bottom main surface of the laminated sheet. The needle plate has multiple needles to be inserted in the laminated sheet, which needles are arranged at a density of, for example, approximately 25 needles/100 cm$^2$ through 5,000 needles/100 cm$^2$ Each supporting plate has multiple through holes for the needles. In a state where the pair of supporting plates is pressed against both sides of the laminated sheet, the needle board is moved toward and away from the laminated sheet. Accordingly, the needles are inserted in and pulled out from the laminated sheet, and multiple needle traces are formed in the interlaced fibers.

In another configuration, the needling device may include a set of two needle boards. Each needle board has a corresponding support plate. The two needle boards are respectively disposed on the top surface and the bottom surface of the laminated sheet, so that the laminated sheet is held by the supporting plates on both sides. The needles on one of the needle boards are arranged in such a manner that their positions do not coincide with those on the other needle board during the needling processing. Furthermore, each of the support plates has multiple through holes that are arranged in consideration of the positions of the needles on each of the needle boards, so that the needles do not abut the support plate when the needling processing is performed from both sides of the laminated sheet. Such a device can be used to sandwich the laminated sheet from both sides with the two supporting plates and perform the needling processing from both sides of the laminated sheet with the two needle boards. With such a method of needling processing, the process time can be reduced.

Next, the laminated sheet formed by the above needling processing is heated from normal temperature, and is continuously fired at a maximum temperature of approximately 1,250 °C to form a mat member having a predetermined volume density (weight per unit area).

Under regular circumstances, to enhance the ease of handling the mat member, the formed mat member is impregnated with an organic binder such as resin from one or both of the main surfaces. However, the amount of the organic binder included in the mat member (the weight of the organic binder with respect to the total weight of the mat member) is preferably as small as possible, preferably within a range of, for example, 1.0 wt% through 4.0 wt%.

Examples of such an organic binder are epoxy resin, acrylic resin, rubber resin, styrene resin, or the like. Preferable examples are acrylic (ACM) resin, acrylonitrile-butadiene rubber (NBR) resin, styrene-butadiene rubber (SBR) resin, or the like.

The mat member manufactured as above is cut into a predetermined shape (for example, the shape illustrated in FIG. 11).

(Step S220)

Next, a heating element is partially or entirely provided on the first main surface. An example of a method of providing the heating member on the mat member is described below, taking as an example the heating element having a function of generating heat in response to a chemical reaction.

First, a heating element raw material is prepared. The heating element raw material may be formed by mixing together particles of starting materials necessary for the chemical reaction such as those indicated in FIGS. 5 through 7, by a predetermined mixing ratio. Under normal circumstances, this mixing ratio is selected according to reaction stoichiometry. For example, in the case of the reaction system of No. 1 in FIG. 5, aluminum powder and iron oxide ($Fe_2O_3$) powder are mixed together so that the molar ratio is 2:1.

Next, the heating element raw material is mixed together with an organic solvent to prepare a liquid such as slurry, a turbid medium, or the like. The heating element raw material and the organic solvent may be mixed together by various existing methods. Next, the resultant liquid is sprayed or brushed onto a first main surface of a mat member, thereby providing a heating element on the first main surface. According to need, the mat member may subsequently undergo thermal treatment in order to vaporize the organic solvent.

Alternatively, the heating element raw material may be sprinkled on the first surface of the mat member as a powder. However, in this case, when the mat member is subsequently handled, the raw material powder may scatter or drop. Thus, in this case, after providing the heating element raw material on the first main surface of the mat member, a polymer film, a polymer sheet, or the like is preferably provided on the first main surface to cover the heating element raw material.

Next, according to need, the same process may be performed to partially or entirely provide a heating element on the second main surface of the mat member, which heating element may be the same kind as that of the first main surface or a different kind from that of the first main surface.

According to the above procedures, a mat member is formed, which has a heating element provided on at least one of its main surfaces.

Effects of the present invention are described below with examples.

<Example 1>

(Manufacturing powder mixture for heating element)

Aluminum powder (manufactured by Kishida Chemical Co., Ltd., purity 90%) having particle sizes of less than or equal to 45 $\mu$m and iron oxide ($Fe_2O_3$) powder (manufactured by Kishida Chemical Co., Ltd., purity 98%) were weighed and mixed together so that the molar ratio was Al:$Fe_2O_3$=2:1. The powders were put in a mortar, acetone was added to the powders, and this was mixed together for 60 minutes. Subsequently, this mixture was put in a drying machine and was dried for one hour in 110 °C, thereby attaining a powder mixture for the heating element.

(Manufacturing inorganic fiber mat member)

Silica sol was added to a basic aluminum chloride aqueous solution in which the aluminum content was 70 g/l and the atom ratio was Al/Cl=1.8, so that the composition ratio of the alumina fiber was $Al_2O_3$:$SiO_2$=72:28, thereby preparing the precursor of alumina fiber. Next, polyvinyl alcohol was added to this precursor of alumina fiber. Subsequently, this liquid was concentrated to prepare a spinning solution. This spinning solution was used in a spinning operation performed by a blowing process. The flow rate of the conveying carrier gas (air) was 52 m/s and the supplying speed of the spinning solution was 5.3 ml/h.

Subsequently, the precursors of alumina fiber were folded and laminated to each other so that a raw material sheet of alumina fiber was manufactured.

Next, needling processing was performed on this raw material sheet. The needling processing was performed from one side of the raw material sheet by disposing a needle board, on which needles are arranged at a density of 80 needle/100 $cm^2$, only on the side of one of the main surfaces of the raw material sheet.

Subsequently, the resultant raw material sheet was continuously fired at a temperature ranging from a normal temperature to a maximum temperature of 1,250 °C for an hour, thereby forming the mat member.

The mat member formed in the above manner, having a thickness of 7.4 mm and a basis weight of 1240 $g/m^2$, was cut to a size of length 50 mm $\times$ width 40 mm, thereby manufacturing a test mat member. This mat member does not include an organic binder.

(Manufacturing test sample)

The mat member manufactured by the above method was used to manufacture an evaluation test sample 310 shown in FIG. 13 by the following method.

The above-described powder mixture was applied entirely on one of the main surfaces (area of 50 mm $\times$ 40 mm) of the mat member manufactured by the above-described method, so that the application amount was 75 $mg/cm^2$. This application amount corresponds to 0.3 $kJ/cm^2$ when converted to heat generation density.

Next, as shown in FIG. 13, a mat member 325 covered by a powder mixture 320 was placed in the center of a stainless steel plate (SUS 304) 330 having a size of length 150 mm $\times$ width 40 mm $\times$ thickness 1 mm, in such a manner that the surface covered by the powder mixture 320 is facing upward. Then, metal spacers 340, each having the same thickness as that of the mat member 325, were provided on both edges of the mat member 325. Subsequently, another stainless steel plate (SUS 304) 350 having a size of length 150 mm $\times$ width 40 mm $\times$ thickness 1 mm was arranged on top of these components, in such a manner as to overlap the position of the stainless steel plate 330 in the direction of laminated layers. Finally, a metal wire 360 was wound around each of the edges of the stainless steel plates 330 and 350 to fix the components together, thereby forming an assembly 300.

This assembly 300 was put in an atmosphere electric furnace, and was kept in there for 10 minutes at a temperature of 1000 °C. Subsequently, the assembly 300 was removed from the electrical furnace and was naturally cooled. The metal wires 360 used for fixing the components were removed from the resultant assembly 300, so that the components were separated from one another. Finally a test sample 310 was formed, in which the stainless steel plate 350 and the mat member 325 were joined together.

As a result of visual observation, the two components were well bonded together. Furthermore, no abnormalities were found in the stainless steel plate 350.

<Example 2>

By the same method as example 1, a test sample was manufactured. However, in example 2, the application amount of the powder mixture on the surface of the mat member was 25 mg/cm$^2$. This application amount corresponds to 0.1 kJ/cm$^2$ when converted to heat generation density. The other conditions were the same as those of example 1.
As a result of visual observation, the two components were well bonded together. Furthermore, no abnormalities were found .in the stainless steel plate 350.

<Example 3>

By the same method as example 1, a test sample was manufactured. However, in example 3, the application amount of the powder mixture on the surface of the mat member was 50 mg/cm$^2$. This application amount corresponds to 0.2 kJ/cm$^2$ when converted to heat generation density. The other conditions were the same as those of example 1.
As a result of visual observation, the two components were well bonded together. Furthermore, no abnormalities were found in the stainless steel plate 350.

<Example 4>

By the same method as example 1, a test sample was manufactured. However, in example 4, the application amount of the powder mixture on the surface of the mat member was 100 mg/cm$^2$. This application amount corresponds to 0.4 kJ/cm$^2$ when converted to heat generation density. The other conditions were the same as those of example 1.
As a result of visual observation, the two components were well bonded together. Furthermore, no abnormalities were found in the stainless steel plate 350.

<Example 5>

By the same method as example 1, a test sample was manufactured. However, in example 5, the application amount of the powder mixture on the surface of the mat member was 150 mg/cm$^2$. This application amount corresponds to 0.6 kJ/cm$^2$ when converted to heat generation density. The other conditions were the same as those of example 1.
As a result of visual observation, the two components were well bonded together. Furthermore, no abnormalities were found in the stainless steel plate 350.

<Comparative example 1>

By the same method as example 1, a test sample was manufactured. However, in comparative example 1, the powder mixture is not applied on the surface of the mat member. The other conditions were the same as those of example 1.
After being kept in an atmosphere electric furnace for 10 minutes at a temperature of 1000 °C, the metal wires used for fixing the components were removed from the resultant assembly. The stainless steel plate 350 and the mat member 325 were not joined together at all.

<Comparative example 2>

By the same method as example 1, an inorganic fiber mat member (length 50 mm × width 40 mm × thickness 7.4 mm) was manufactured. On one of the main surfaces of this mat member (area of 50 mm × 40 mm), a high polymer material was provided. The application amount was 0.8 mg/cm$^2$. A styrene-butadiene adhesive (spray type adhesive Z-2 manufactured by Konishi Co., Ltd.) was used as the high polymer material.
Subsequently, a test sample was manufactured by the same method as example 1. However, after being kept in an atmosphere electric furnace for 10 minutes at a temperature of 1000 °C, the stainless steel plate 350 and the mat member 325 were not joined together at all.
Table 1 indicates the manufacturing conditions and the state after heat treatment for all of the test samples of the examples and comparative examples.

(Table 1)

| | POWDER MIXTURE FOR GENERATING HEAT | | | APPLICATION AMOUNT [mg/cm$^2$] | HEAT GENERATION DENSITY [kJ/cm$^2$] | STATE OF DEPOSITION | STATE OF STAINLESS STEAL PLATE | BONDING STRENGTH (N/cm$^2$) |
|---|---|---|---|---|---|---|---|---|
| | METAL | INORGANIC COMPOUND | MOLAR RATIO | | | | | |
| EXAMPLE 1 | Al | Fe$_2$O$_3$ | 2:1 | 75 | 0.3 | GOOD | GOOD | 2.38 |
| EXAMPLE 2 | Al | Fe$_2$O$_3$ | 2:1 | 25 | 0.1 | GOOD | GOOD | 1.84 |
| EXAMPLE 3 | Al | Fe$_2$O$_3$ | 2:1 | 50 | 0.2 | GOOD | GOOD | 2.14 |
| EXAMPLE 4 | Al | Fe$_2$O$_3$ | 2:1 | 100 | 0.4 | GOOD | GOOD | 2.95 |
| EXAMPLE 5 | Al | Fe$_2$O$_3$ | 2:1 | 150 | 0.6 | GOOD | DEFORMED | 3.77 |
| COMPARATIVE EXAMPLE 1 | - | - | - | - | - | - | GOOD | 0.96 |
| COMPARATIVE EXAMPLE 2 | APPLY HIGH POLYMER MATERIAL | | | 0.8 | UNKNOWN | BAD | GOOD | 0.98 |

(Evaluation of bonding strength)

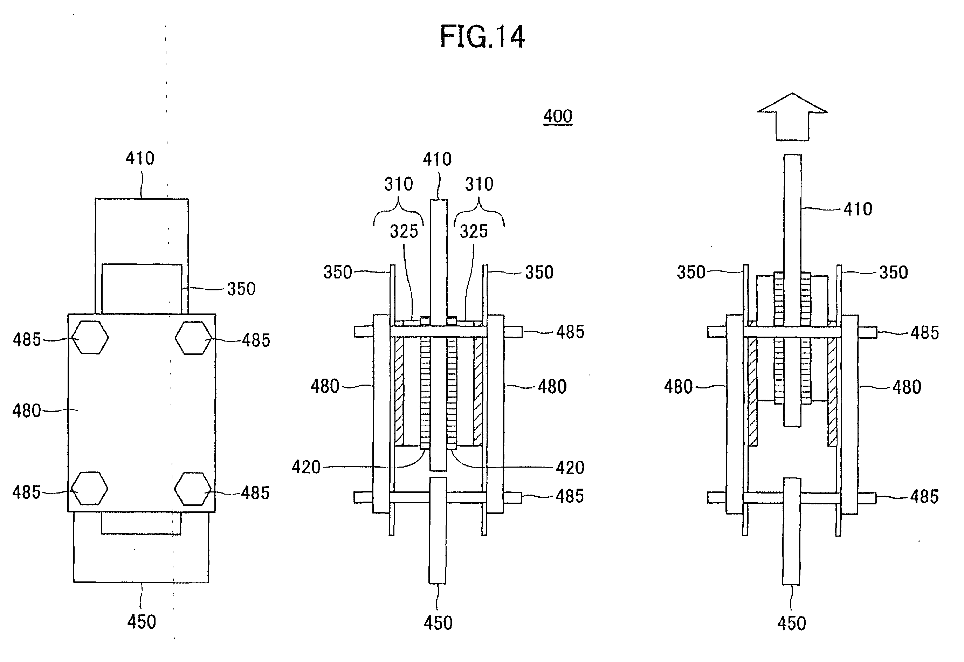

The bonding strength between the mat member and the stainless steel plate was evaluated for each of the test samples (examples 1 through 5 and comparative examples 1 and 2) manufactured by the above method. The evaluation of the bonding strength was performed with a testing apparatus 400 shown in FIG. 14.

The testing apparatus 400 includes a center plate 410 that can move up and down, a fixed plate 450 provided on the same axis as the center plate 410 and fixed at this position, and two pressing tools 480. The center plate 410, the fixed plate 450, and the pressing tools 480 are made of stainless steel.

Attachment members 420 are respectively provided on the front side and back side of the center plate 410 at positions corresponding to each other. On each attachment member 420, on the surface opposite to that in contact with the center plate 410, multiple needle-like protruding parts are provided, extending in a substantially perpendicular direction with respect to each surface of the center plate 410. The full length of each needle-like protruding part is approximately 2 mm. The length and width of each of the attachment members 420 are substantially the same as those of the above-described mat member 325 (to be more precise, the attachment member 420 has a size of length 50 mm × width 40 mm, but is somewhat larger than the mat member 325).

The pressing tools 480 are made of rectangular planks, and each of the pressing tools 480 has openings corresponding to bolt holes at four corners. Furthermore, the fixed plate 450 also has openings corresponding to bolt holes at two predetermined positions.

To evaluate the bonding strength, two of each of the above-described evaluation test samples 310 were used. When setting the evaluation test samples 310 in the testing apparatus 400, each evaluation test sample 310 was fixed to the surface of one of the pressing tools 480. Each evaluation test sample 310 was fixed, with the use of double-faced adhesive tape or the like, in such a manner that the side of the stainless steel plate 350 of the evaluation test sample 310 was in contact with the pressing tool 480.

Next, the pressing tools 480 were disposed on both sides of the center plate 410, in such a manner that the evaluation test samples 310 were located inside the center plate 410 and the pressing tools 480. More specifically, the pressing tools 480 were disposed in such a manner that the surfaces of the mat members 325 of the evaluation test samples 310 were in contact with the surfaces of the attachment members 420. As described above, needle-like protruding parts are provided on the surfaces of the attachment members 420. With the use of these protruding parts, each evaluation test sample 310 was fixed to the center plate 410. Next, tightening bolts 485 were put through the four holes of one of the pressing tools 480 and the other one of the pressing tools 480, thereby tightening together both of the pressing tools 480 and fixing the evaluation test samples 310 provided between the pressing tools 480 (see left diagram of FIG. 14). In the actual test, the tightening force was adjusted so that the thickness of each mat member 325 after being set was 5.5 mm. As shown in the center of FIG. 14, the bottom two tightening bolts 485 of the four tightening bolts 485 go through not only the pressing tools 480 but also the fixed plate 450. Accordingly, the positions of these two pressing tools 480 were fixed.

To perform the test, as shown in the right drawing in FIG. 14, the center plate 410 is pulled upwards. In this state, the positions of the fixed plate 450 and the pressing tools 480 fixed to the fixed plate 450 do not change. Accordingly, by moving the center plate 410, the interface of the mat member 325 and the stainless steel plate 350 receives a shearing force, and therefore it is possible to evaluate the bonding strength at the interface of the mat member 325 and the stainless steel plate 350 by performing this test.

The speed of pulling up the center plate 410 was 10 mm/minute, and based on the obtained maximum load, the bonding strength was calculated by the following formula.

$$\texttt{bonding strength (N/cm}^2\texttt{)=maximum load (N)/(area of mat}$$
$$\texttt{member (cm}^2\texttt{)×2)}$$

The values of the bonding strength obtained for the test samples are shown in the above Table 1 (as described above, with regard to the test samples of comparative examples 1 and 2, the stainless steel plate 350 and the mat member 325 were not joined together at all. Therefore, in Table 1, the values of the bounding strength for comparative examples 1 and 2 are background values (zero) of the testing apparatus). These results say that the bonding strengths of the test samples of examples 1 through 5 are significantly higher than those of the conventional samples of comparative examples 1 and 2.

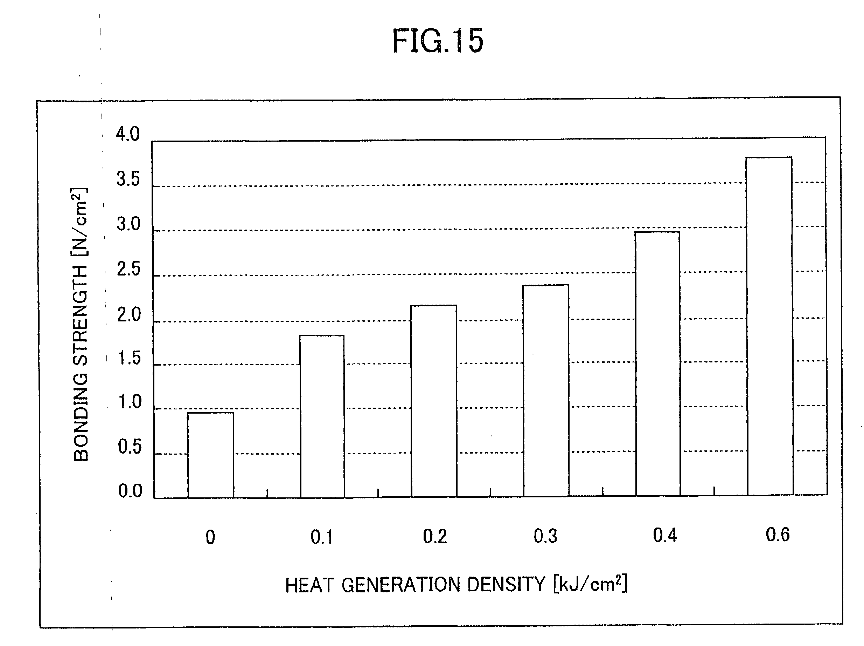

FIG. 15 illustrates the relationship between heat generation densities of the powder mixture and bonding strength. This diagram shows that as the heat generation density of the powder mixture increases, the bonding strength increases. However, as indicated by example 5 in Table 1, if the heat generation density was too high, the bonding target that is to be bonded with the mat member would deteriorate or deform due to the heat. Accordingly, the heat generation density is preferably less than 0.6 kJ/cm.

According to the present invention, a mat member includes a first main surface; a second main surface; inorganic fiber; and a heating element configured to emit heat, the heating element being provided on at least one of the first main surface and the second main surface.

The heating element can be provided as a powder or as a layer.

The heating element can be provided in a state bound by an organic binder.

The heating element can emit the heat in response to an exothermic chemical reaction.

The heating element can be provided in such a manner that a heat generation density per unit area falls in a range of 0.1 kJ/cm$^2$ through 0.4 kJ/cm$^2$.

A metal or an alloy, and an inorganic compound can be used as starting materials for the chemical reaction.

The inorganic compound can include iron oxide.

A first metal or a first alloy and a second metal or a second alloy can be used as the starting materials for the chemical reaction.

At least one material included in the starting materials can have a melting point falling in a range of 450 °C through 1000 °C.

The metal can include aluminum or an aluminum alloy.

A product of the chemical reaction can have a melting point that exceeds 1000 °C.

**Claims**

1. A mat member (30) comprising:

   a first main surface (251);
   a second main surface (261);
   inorganic fiber; and
   a heating element (81, 91) configured to emit heat, the heating element being provided on at least one of the first main surface and the second main surface, and
   the heating element emits the heat in response to an exothermic chemical reaction, **characterized in that** one of a first metal or a first alloy, and one of a second metal or a second alloy or an inorganic compound are used as starting material for the chemical reaction.

2. The mat member (30) according to claim 1, wherein the heating element (81, 91) is provided as a powder or as a layer.

3. The mat member (30) according to claim 2, wherein the heating element (81, 91) can be provided in a state bound by an organic binder.

4. The mat member (30) according to any one of claims 1 through 3, wherein the heating element (81, 91) is provided in such a manner that a heat generation density per unit area falls in a range of 0.1 kJ/cm$^2$ through 0.4 kJ/cm$^2$.

5. The mat member (30) according to any one of claims 1 through 4, wherein the inorganic compound includes iron oxide.

6. The mat member (30) according to any one of claims 1 through 5, wherein at least one material included in the starting materials has a melting point falling in a range of 450 °C through 1000 °C.

7. The mat member (30) according to any one of claims 1 through 6, wherein the metal includes aluminum or an aluminum alloy.

8. The mat member (30) according to any one of claims 1 through 7, wherein a product of the chemical reaction has a melting point that exceeds 1000 °C.

**Patentansprüche**

1. Mattenelement (30) umfassend:

   eine erste Hauptoberfläche (251);

eine zweite Hauptoberfläche (261);

anorganische Faser; und

ein Heizelement (81, 91), das konfiguriert ist, um Wärme auszustrahlen, wobei das Heizelement auf mindestens einer der ersten Hauptoberfläche und der zweiten Hauptoberfläche angebracht ist,

und

das Heizelement die Wärme als Antwort auf eine exotherme chemische Reaktion ausstrahlt,

**dadurch gekennzeichnet, dass**

eines von einem ersten Metall oder einer ersten Legierung und eines von einem zweiten Metall oder einer zweiten Legierung oder ein anorganischer Stoff als Ausgangsmaterial für die chemische Reaktion verwendet werden.

2. Mattenelement (30) gemäß Anspruch 1, wobei das Heizelement (81, 91) als Pulver oder als Schicht angebracht ist.

3. Mattenelement (30) gemäß Anspruch 2, wobei das Heizelement (81, 91) in einem Zustand, in dem es durch ein organisches Bindemittel gebunden ist, angebracht werden kann.

4. Mattenelement (30) gemäß einem der Ansprüche 1 bis 3, wobei das Heizelement (81, 91) auf solch eine Art angebracht ist, dass die Wärmeentwicklungsdichte pro Flächeneinheit in einen Bereich von 0,1 kJ/cm$^2$ bis 0,4 kJ/cm$^2$ fällt.

5. Mattenelement (30) gemäß einem der Ansprüche 1 bis 4, wobei der anorganische Stoff Eisenoxid aufweist.

6. Mattenelement (30) gemäß einem der Ansprüche 1 bis 5, wobei mindestens ein Material, das in den Anfangsmaterialien enthalten ist, einen Schmelzpunkt im Bereich von 450°C bis 1.000°C aufweist.

7. Mattenelement (30) gemäß einem der Ansprüche 1 bis 6, wobei das Metall Aluminium oder eine Aluminiumlegierung einschließt.

8. Mattenelement (30) gemäß einem der Ansprüche 1 bis 7, wobei ein Produkt der chemischen Reaktion einen Schmelzpunkt aufweist, der 1.000°C übersteigt.

**Revendications**

1. Elément formant coussinet (30) comprenant :

une première surface principale (251) ;

une deuxième surface principale (261) ;

des fibres inorganiques ; et

un élément de chauffage (81, 91) configuré pour émettre de la chaleur, l'élément de chauffage étant prévu sur au moins l'une de la première surface principale et de la deuxième surface principale, et

l'élément de chauffage émet de la chaleur en réponse à une réaction chimique exothermique,

**caractérisé en ce que**

l'un d'un premier métal ou d'un premier alliage, et l'un d'un deuxième métal ou d'un deuxième alliage ou d'un composé inorganique sont utilisés comme matières premières pour la réaction chimique.

2. Elément formant coussinet (30) selon la revendication 1, dans lequel l'élément de chauffage (81, 91) est prévu sous forme de poudre ou sous forme de couche.

3. Elément formant coussinet (30) selon la revendication 2, dans lequel l'élément de chauffage (81, 91) peut être prévu dans un état lié par un liant organique.

4. Elément formant coussinet (30) selon l'une quelconque des revendications 1 à 3, dans lequel l'élément de chauffage (81, 91) est prévu de telle manière qu'une densité de génération de chaleur par unité de surface se trouve dans une plage de 0,1 kJ/cm$^2$ à 0,4 kJ/cm$^2$.

5. Elément formant coussinet (30) selon l'une quelconque des revendications 1 à 4, dans lequel le composé inorganique comporte l'oxyde de fer.

EP 2 336 516 B1

**6.** Elément formant coussinet (30) selon l'une quelconque des revendications 1 à 5, dans lequel au moins une matière comprise dans les matières premières a un point de fusion qui se trouve dans une plage de 450°C à 1000°C.

**7.** Elément formant coussinet (30) selon l'une quelconque des revendications 1 à 6, dans lequel le métal comporte de l'aluminium ou un alliage d'aluminium.

**8.** Elément formant coussinet (30) selon l'une quelconque des revendications 1 à 7, dans lequel un produit de la réaction chimique a un point de fusion qui dépasse 1000 °C.

16

# FIG.1

FIG.2

10

12

80(79)

24

20

90(89)

# FIG.3

EP 2 336 516 B1

FIG.4

EP 2 336 516 B1

# FIG.5

| NO. | METAL | INORGANIC COMPOUND | REACTION FORMULA | MELTING POINT OF PRODUCT |
|---|---|---|---|---|
| 1 | Al | $Fe_2O_3$ | $2Al + Fe_2O_3 \Rightarrow Al_2O_3 + 2Fe$ | 2020°C($Al_2O_3$), 1535°C (Fe) |
| 2 | Al | $TiO_2$ | $4Al + 3TiO_2 \Rightarrow 2Al_2O_3 + 3Ti$ | 2020°C($Al_2O_3$), 1668°C (Ti) |
| 3 | Al | $TiO_2$ | $13Al + 3TiO_2 \Rightarrow 2Al_2O_3 + 3Al_3Ti$ | 2020°C($Al_2O_3$), 1350°C ($Al_3Ti$) |
| 4 | Al | $Si_3N_4$ | $4Al + Si_3N_4 \Rightarrow 4AlN + 3Si$ | 2200°C(AlN), 1414°C (Si) |
| 5 | Al | TiN | $4Al + TiN \Rightarrow AlN + Al_3Ti$ | 2200°C(AlN), 1350°C ($Al_3Ti$) |
| 6 | Al | ZrN | $4Al + ZrN \Rightarrow AlN + Al_3Zr$ | 2200°C(AlN), 1610°C ($Al_3Zr$) |
| 7 | Al | HfN | $4Al + HfN \Rightarrow AlN + Al_3Hf$ | 2200°C(AlN), 1710°C ($Al_3Hf$) |
| 8 | Al | VN | $4Al + VN \Rightarrow AlN + Al_3V$ | 2200°C(AlN), 1360°C ($Al_3V$) |
| 9 | Al | NbN | $4Al + NbN \Rightarrow AlN + Al_3Nb$ | 2200°C(AlN), 1641°C ($Al_3Nb$) |
| 10 | Al | TaN | $4Al + TaN \Rightarrow AlN + Al_3Ta$ | 2200°C(AlN), 1550°C ($Al_3Ta$) |

EP 2 336 516 B1

## FIG.6

| NO. | FIRST METAL | SECOND METAL | REACTION FORMULA | MELTING POINT OF PRODUCT |
|---|---|---|---|---|
| 1 | Al | Fe | $3Al + Fe \Rightarrow Al_3Fe$ | 1145°C ($Al_3Fe$) |
| 2 | Al | Ti | $3Al + Ti \Rightarrow Al_3Ti$ | 1350°C ($Al_3Ti$) |
| 3 | Al | Ti | $Al + Ti \Rightarrow AlTi$ | 1445°C ($AlTi$) |
| 4 | Al | Ti | $Al + 3Ti \Rightarrow AlTi_3$ | 1180°C ($AlTi_3$) |
| 5 | Al | Zr | $3Al + Zr \Rightarrow Al_3Zr$ | 1610°C ($Al_3Zr$) |
| 6 | Al | Hf | $3Al + Hf \Rightarrow Al_3Hf$ | 1710°C ($Al_3Hf$) |
| 7 | Al | V | $3Al + V \Rightarrow Al_3V$ | 1360°C ($Al_3V$) |
| 8 | Al | Nb | $3Al + Nb \Rightarrow Al_3Nb$ | 1641°C ($Al_3Nb$) |
| 9 | Al | Ta | $3Al + Ta \Rightarrow Al_3Ta$ | 1550°C ($Al_3Ta$) |
| 10 | Al | Ni | $3Al + 2Ni \Rightarrow Al_3Ni_2$ | 1160°C ($Al_3Ni_2$) |
| 11 | Al | Ni | $Al + 3Ni \Rightarrow AlNi_3$ | 1385°C ($AlNi_3$) |
| 12 | Al | Ni | $Al + Ni \Rightarrow AlNi$ | 1660°C ($AlNi$) |

# FIG.7

EP 2 336 516 B1

| NO. | FIRST MATERIAL | SECOND MATERIAL | THIRD MATERIAL | REACTION FORMULA | MELTING POINT OF PRODUCT |
|-----|----------------|-----------------|----------------|------------------|--------------------------|
| 1 | Al | Ti | $B_4C$ | $3Al + 4Ti + B_4C \Rightarrow 2TiB_2 + TiC + Al_3Ti$ | $3220°C(TiB_2)$, $3070°C(TiC)$, $1390°C(Al_3Ti)$ |
| 2 | Al | Ti | $Al_4C_3$ | $3Al + 14Ti + 3Al_4C_3 \Rightarrow 9TiC + 5Al_3Ti$ | $3070°C(TiC)$, $1390°C(Al_3Ti)$ |

# FIG.8

```
            ┌─────────────────┐
            │      START       │
            └─────────────────┘
                     │
                     ▼              ┌S110
    ┌───────────────────────────────────┐
    │     PREPARE CASING, MAT MEMBER,    │
    │   AND EXHAUST GAS TREATING  BODY   │
    └───────────────────────────────────┘
                     │
                     ▼              ┌S120
    ┌───────────────────────────────────┐
    │         PROVIDE FIRST STARTING     │
    │         MATERIAL TO SURFACE OF     │
    │       AT LEAST ONE OF  CASING,     │
    │      MAT MEMBER, AND EXHAUST       │
    │           GAS TREATING BODY        │
    └───────────────────────────────────┘
                     │
                     ▼              ┌S130
    ┌───────────────────────────────────┐
    │   PROVIDE SECOND STARTING MATERIAL │
    │   TO SURFACE THAT COMES IN  CONTACT│
    │       WITH OR COMES NEAR SURFACE   │
    │      PROVIDED WITH FIRST STARTING  │
    │        MATERIAL WHEN  EXHAUST GAS  │
    │   TREATING APPARATUS IS COMPLETED  │
    └───────────────────────────────────┘
                     │
                     ▼              ┌S140
    ┌───────────────────────────────────┐
    │ HEATING ELEMENT IS FORMED AS FIRST │
    │   AND SECOND STARTING MATERIALS    │
    │      COME NEAR OR CONTACT EACH     │
    │  OTHER WHEN EXHAUST GAS TREATING   │
    │  BODY AROUND WHICH MAT MEMBER      │
    │     IS WOUND IS PUT INTO CASING    │
    └───────────────────────────────────┘
                     │
                     ▼
            ┌─────────────────┐
            │       END        │
            └─────────────────┘
```

# FIG.9

EP 2 336 516 B1

FIG.10

EP 2 336 516 B1

EP 2 336 516 B1

# FIG.11

# FIG.12

```
┌─────────────────┐
│      START      │
└─────────────────┘
         │
         ▼
┌─────────────────────────┐
│   PROVIDE MAT MEMBER    │──── S210
└─────────────────────────┘
         │
         ▼
┌─────────────────────────┐
│ PROVIDE HEATING ELEMENT │
│   TO FIRST MAIN SURFACE │──── S220
│      AND/OR SECOND      │
│      MAIN  SURFACE      │
└─────────────────────────┘
         │
         ▼
┌─────────────────┐
│       END       │
└─────────────────┘
```

# FIG.13

<u>300</u>

<u>310</u>

# FIG.14

EP 2 336 516 B1

## FIG.15

EP 2 336 516 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005074243 A

- US 5413766 A